(19) Europäisches Patentamt
European Patent Office
Office européen des brevets

(11) **EP 4 143 260 B1**

(12) # EUROPEAN PATENT SPECIFICATION

(45) Date of publication and mention
of the grant of the patent:
**08.04.2026 Bulletin 2026/15**

(21) Application number: **21730329.6**

(22) Date of filing: **29.04.2021**

(51) International Patent Classification (IPC):
**C08L 53/00** $^{(2006.01)}$   **C09J 4/00** $^{(2006.01)}$

(52) Cooperative Patent Classification (CPC):
(C-Sets available)
**C08L 53/00; C09J 153/00**   (Cont.)

(86) International application number:
**PCT/US2021/030005**

(87) International publication number:
**WO 2021/222652 (04.11.2021 Gazette 2021/44)**

(54) **COMPOSITIONS CONTAINING HIGH MELT INDEX ETHYLENE/ALPHA-OLEFIN MULTI-BLOCK INTERPOLYMERS**

ZUSAMMENSETZUNGEN MIT ETHYLEN/ALPHA-OLEFIN-MULTIBLOCKINTERPOLYMEREN MIT HOHEM SCHMELZINDEX

COMPOSITIONS CONTENANT DES INTERPOLYMÈRES MULTIBLOCS ÉTHYLÈNE/ ALPHA-OLÉFINE À INDICE DE FLUIDITÉ ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2020 US 202063017537 P**

(43) Date of publication of application:
**08.03.2023 Bulletin 2023/10**

(73) Proprietor: **Dow Global Technologies LLC**
**Midland, MI 48674 (US)**

(72) Inventors:
• **JIN, Yi**
**Lake Jackson, Texas 77566 (US)**
• **LEE, Jong, Young**
**Lake Jackson, Texas 77566 (US)**
• **MCLENNAGHAN, Allan, Walter**
**8810 Horgen (CH)**
• **RICKEY, Cynthia, L.**
**Lake Jackson, Texas 77566 (US)**

(74) Representative: **Boult Wade Tennant LLP**
**Salisbury Square House**
**8 Salisbury Square**
**London EC4Y 8AP (GB)**

(56) References cited:
**EP-A1- 2 580 286     EP-A1- 2 938 690**
**EP-A1- 3 090 028     US-A1- 2018 223 092**

**(Cont. next page)**

(52) Cooperative Patent Classification (CPC): (Cont.)

C-Sets
**C08L 53/00, C08L 91/00, C08L 91/00**

**Description**

BACKGROUND OF THE INVENTION

Adhesive compositions containing ethylene/alpha-olefin multi-block copolymers have been used in a wide variety of applications. However, there is a need for low viscosity adhesives that have improved processability, while maintaining, or improving, adhesive properties, such as loop tack and peel strength. A typical hot melt adhesive formulation comprises polymer, tackifier, oil or other low molecular weight component. Reducing the viscosity or molecular weight of the polymer component, or reducing the content of this polymer, are typical ways to reduce final adhesive viscosity. However, since the polymer component represents the only high molecular weight species in the formulation, the polymer is responsible for the mechanical strength and the cohesive strength of the adhesive. As such, reducing the viscosity or molecular weight of polymer, or reducing its content, often result in a deterioration of the adhesive properties.

U.S. Patent 9,243,173 discloses an adhesive composition comprising the following: a) an olefin block copolymer comprising ethylene and an alpha-olefin comonomer, b) a tackifier and c) an oil. The olefin block copolymer comprises: i) hard blocks, where the hard blocks comprise 1-8 mol% comonomer, and where the hard blocks are present in an amount of 20-45 wt% of the olefin block copolymer; and ii) soft blocks, where the soft blocks comprise 10-14 mol% comonomer. The olefin block copolymer has a Mw of 15,000-100,000 g/mol, a total crystallinity of 5-30 wt%, a Tm of 60-105°C, and, a Tc of 45-100°C. See claim 1. This patent, in Table 1, discloses two higher melt index interpolymers of high density and/or high hard segment (HS) content. Both high density and high HS content work to increase the crystallinity of the adhesive composition, and thus decrease the tackiness of the composition.

U.S. Patent 7,524,911 discloses an adhesive composition comprising at least one ethylene/alpha-olefin interpolymer, at least one tackifier, and optionally, at least one additive, such as a plasticizer, a wax or an antioxidant. See abstract. However, these compositions typically contain high molecular weight multi-block interpolymers, or contain, as seen in Table 10b, a high density, higher melt index interpolymer, which would reduce tackiness.

Additional adhesive compositions are disclosed in U.S. Publication 2011/0262747, U.S. Patent 7,989,543 and U.S. Patent 7,608,668.

EP 3 090 028 A1 relates to a hot melt adhesive composition.

EP 2 580 286 A1 relates to oil-extended olefin block copolymer compositions.

US 2018/223092 A1 relates to a film comprising a polymer blend.

EP 2 938 690 A1 relates to a pressure sensitive adhesive composition.

However, as discussed above, there remains a need for lower viscosity adhesive compositions that maintain or improve adhesive properties, such as loop tack and peel strength. This need has been met by the following invention.

SUMMARY OF THE INVENTION

A composition comprising the following:

a) at least one ethylene/alpha-olefin multi-block interpolymer that comprises soft segments (SS) and hard segments (HS), and wherein the interpolymer comprises the following properties:

i) a melt index (I2) $\geq$ 30 dg/min,
ii) a molar ratio of "the alpha-olefin in the SS" to "the alpha-olefin in the HS" $\geq$ 18,
iii) a weight ratio of the SS to the HS $\leq$ 12.0;

b) at least one tackifier and/or at least one oil.

DETAILED DRESCRIPTION OF THE INVENTION

As discussed above, a composition is provided, which comprises the following:

a) at least one ethylene/alpha-olefin multi-block interpolymer that comprises soft segments (SS) and hard segments (HS), and wherein the interpolymer comprises the following properties:

i) a melt index (I2) $\geq$ 30 dg/min,
ii) a molar ratio of "the alpha-olefin in the SS" to "the alpha-olefin in the HS" $\geq$ 18,
iii) a weight ratio of the SS to the HS $\leq$ 12.0;

b) at least one tackifier and/or at least one oil.

The above composition may comprise a combination of two or more embodiments, as described herein. The ethylene/alpha-olefin multi-block interpolymer (component a) may comprise a combination of two or more embodiments, as described herein. Component b may comprise a combination of two or more embodiments, as described herein.

In one embodiment, or a combination of two or more embodiments, each described herein, the ethylene/alpha-olefin multi-block interpolymer (component a) has a melt index (I2) $\geq$ 35, or $\geq$ 40, or $\geq$ 45, or $\geq$ 50, or $\geq$ 55 dg/min. In one embodiment, or a combination of two or more embodiments, each described herein, the ethylene/alpha-olefin multi-block interpolymer has a melt index (I2) $\leq$ 300, or $\leq$ 250, or $\leq$ 200, or $\leq$ 150, or $\leq$ 140, or $\leq$ 130, or $\leq$ 120, or $\leq$ 110 dg/min.

In one embodiment, or a combination of two or more embodiments, each described herein, the ethylene/alpha-olefin multi-block interpolymer has a molar ratio of "alpha-olefin in the SS" to "alpha-olefin in the HS" $\geq$ 19, or $\geq$ 20, or $\geq$ 21. In one embodiment, or a combination of two or more embodiments, each described herein, the ethylene/alpha-olefin multi-block interpolymer has a molar ratio of "alpha-olefin in the SS" to "alpha-olefin in the HS" $\leq$ 100, or $\leq$ 80, or $\leq$ 60, or $\leq$ 50, or $\leq$ 40, or $\leq$ 30.

In one embodiment, or a combination of two or more embodiments, each described herein, the ethylene/alpha-olefin multi-block interpolymer has an amount of alpha-olefin in the HS $\leq$ 0.90 mol%, or $\leq$ 0.88 mol%, or $\leq$ 0.86 mol%, or $\leq$ 0.84 mol%, based on the total moles of monomers in the HS. In one embodiment, or a combination of two or more embodiments, each described herein, the ethylene/alpha-olefin multi-block interpolymer has an amount of alpha-olefin in the HS $\geq$ 0.50 mol%, or $\geq$ 0.55 mol%, or $\geq$ 0.60 mol%, or $\geq$ 0.65 mol%, or $\geq$ 0.70 mol%, based on the total moles of monomers in the HS.

In one embodiment, or a combination of two or more embodiments, each described herein, the ethylene/alpha-olefin multi-block interpolymer has an amount of alpha-olefin in the SS $\leq$ 20.0 mol%, or $\leq$ 19.5 mol%, or $\leq$ 19.0 mol%, or $\leq$ 18.5 mol%, or $\leq$ 18.0 mol%, or $\leq$ 17.8 mol%, or $\leq$ 17.6 mol%, or $\leq$ 17.5 mol%, based on the total moles of monomers in the SS. In one embodiment, or a combination of two or more embodiments, each described herein, the ethylene/alpha-olefin multi-block interpolymer has an amount of alpha-olefin in the SS $\geq$ 15.0 mol%, or $\geq$ 15.5 mol%, or $\geq$ 16.0 mol%, or $\geq$ 16.5 mol%, or $\geq$ 17.0 mol%, based on the total moles of monomers in the SS.

In one embodiment, or a combination of two or more embodiments, each described herein, the ethylene/alpha-olefin multi-block interpolymer has a weight ratio of SS to HS $\leq$ 11.8, or $\leq$ 11.6, or $\leq$ 11.4, or $\leq$ 11.2, or $\leq$ 11.0, or $\leq$ 10.8, or $\leq$ 10.6, or $\leq$ 10.4, or $\leq$ 10.2. In one embodiment, or a combination of two or more embodiments, each described herein, the ethylene/alpha-olefin multi-block interpolymer has a weight ratio of SS to HS $\geq$ 5.0, or $\geq$ 5.5, or $\geq$ 6.0, or $\leq$ 6.2, or $\geq$ 6.4, or $\geq$ 6.6, or $\geq$ 6.8, or $\geq$ 7.0, or $\geq$ 7.2.

In one embodiment, or a combination of two or more embodiments, each described herein, the ethylene/alpha-olefin multi-block interpolymer has a total amount of alpha-olefin $\geq$ 10 mol%, or $\geq$ **11** mol%, or $\geq$ 12 mol%, or $\geq$ 13 mol%, or $\geq$ 14 mol%, or $\geq$ 15 mol%, based on the total moles of monomers in the interpolymer. In one embodiment, or a combination of two or more embodiments, each described herein, the ethylene/alpha-olefin multi-block interpolymer has a total amount of alpha-olefin $\leq$ 50 mol%, or $\leq$ 40 mol%, or $\leq$ 30 mol%, or $\leq$ 25 mol%, or $\leq$ 20 mol%, or $\leq$ 18 mol%, or $\leq$ 16 mol% based on the total moles of monomers in the interpolymer.

In one embodiment, or a combination of two or more embodiments, each described herein, the ethylene/alpha-olefin multi-block interpolymer has a density $\geq$ 0.856 g/cc, or $\geq$ 0.858 g/cc, or $\geq$ 0.860 g/cc, or $\geq$ 0.862 g/cc, or $\geq$ 0.863 g/cc, or $\geq$ 0.864 g/cc, or $\geq$ 0.865 g/cc, or $\geq$ 0.866 g/cc, or $\geq$ 0.867 g/cc (1 cc = 1 cm$^3$). In one embodiment, or a combination of two or more embodiments, each described herein, the ethylene/alpha-olefin multi-block interpolymer has a density $\leq$ 0.874 g/cc, or $\leq$ 0.873 g/cc, or $\leq$ 0.872 g/cc or $\leq$ 0.871 g/cc, or $\leq$ 0.870 g/cc, or $\leq$ 0.869 g/cc.

In one embodiment, or a combination of two or more embodiments, each described herein, the ethylene/alpha-olefin multi-block interpolymer has a molecular weight distribution MWD (= Mw/Mn) $\geq$ 1.5, or $\geq$ 1.6, or $\geq$ 1.7, or $\geq$ 1.8, or $\geq$ 1.9, or $\geq$ 2.0, or $\geq$ 2.1. In one embodiment, or a combination of two or more embodiments, each described herein, the ethylene/alpha-olefin multi-block interpolymer has a molecular weight distribution MWD $\leq$ 3.0, or $\leq$ 2.9, or $\leq$ 2.8, or $\leq$ 2.7, or $\leq$ 2.6, or $\leq$ 2.5, or $\leq$ 2.4, or $\leq$ 2.3, or $\leq$ 2.2.

In one embodiment, or a combination of two or more embodiments, each described herein, the composition comprises at least one tackifier or at least one oil.

In one embodiment, or a combination of two or more embodiments, each described herein, the composition comprises at least one tackifier and at least one oil.

In one embodiment, or a combination of two or more embodiments, each described herein, the composition comprises $\geq$ 98.5 wt%, $\geq$ 99.0 wt%, or $\geq$ 99.1 wt%, or $\geq$ 99.2 wt%, or $\geq$ 99.3 wt%, or $\geq$ 99.4 wt% of the sum of components a and b, based on the weight of the composition. In one embodiment, or a combination of two or more embodiments, each described herein, the composition comprises $\leq$ 100.0 wt%, or $\leq$ 99.9 wt%, $\leq$ 99.8 wt%, or $\leq$ 99.7 wt%, or $\leq$ 99.6 wt%, or $\leq$ 99.5 wt% of the sum of components a and b, based on the weight of the composition.

In one embodiment, or a combination of two or more embodiments, each described herein, the composition has a viscosity (177°C) $\geq$ 2 Pa*s (2,000 cP), or $\geq$ 2.4 Pa*s (2,400 cP), or $\geq$ 2.6 Pa*s (2,600 cP), or $\geq$ 2.8 Pa*s (2,800 cP), or $\geq$ 3 Pa*s (3,000 cP), or $\geq$ 3.2 Pa*s (3,200 cP). In one embodiment, or a combination of two or more embodiments, each described herein, the composition has a viscosity (177°C) $\leq$ 15 Pa*s (15,000 cP), or $\leq$ 14 Pa*s (14,000 cP), or $\leq$ 13 Pa*s (13,000 cP),

or $\leq$ 12 Pa*s (12,000 cP), or $\leq$ 11 Pa*s (11,000 cP), or $\leq$ 10 Pa*s (10,000 cP), or $\leq$ 9 Pa*s (9,000 cP), or $\leq$ 8 Pa*s (8,000 cP), or $\leq$ 7 Pa*s (7,000 cP), or $\leq$ 6.8 Pa*s (6,800 cP), or $\leq$ 6.6 Pa*s (6,600 cP), or $\leq$ 6.4 Pa*s (6,400 cP), or $\leq$ 6.2 Pa*s (6,200 cP).

In one embodiment, or a combination of two or more embodiments, each described herein, the composition meets the following relationship: [(Loop Tack (N)/(Viscosity (mPa*s)) x (1000 (mPa*s/N))] = [(Loop Tack (N)/(Viscosity (cP)) x (1000 (cP/N))] $\geq$ 4.0, or $\geq$ 4.2, or $\geq$ 4.4, or $\geq$ 4.6, or $\geq$ 4.8, or $\geq$ 5.0, or $\geq$ 5.2. Here, the viscosity is measured at 177°C.

In one embodiment, or a combination of two or more embodiments, each described herein, the composition meets the following relationship: [(90 Degree Peel (0.18 kg/cm)/(Viscosity (mPa*s)) x (1000 (mPa*s. 5.6 cm/kg))] = [(90 Degree Peel (lb/in)/(Viscosity (cP)) x (1000 (cP·in/lb))] $\geq$ 1.0, or $\geq$ 1.1, or $\geq$ 1.2, or $\geq$ 1.3. Here, the viscosity is measured at 177°C.

In one embodiment, or a combination of two or more embodiments, each described herein, the alpha-olefin of the multi-block interpolymer (component a) is a C3-C20 alpha-olefin, and further a C3-C10 alpha-olefin. In one embodiment, or a combination of two or more embodiments, each described herein, the alpha-olefin is selected from propylene, 1-butene, 1-pentene, 1-hexene or 1-octene, and further propylene, 1-butene or 1-octene, and further 1-butene or 1-octene, and further 1-octene.

In one embodiment, or a combination of two or more embodiments, each described herein, the ethylene/alpha-olefin multi-block interpolymer is an ethylene/alpha-olefin multi-block copolymer. In one embodiment, or a combination of two or more embodiments, each described herein, the ethylene/alpha-olefin multi-block interpolymer is selected from the following: an ethylene/propylene multi-block copolymer, an ethylene/butene multi-block copolymer, or an ethylene/octene multi-block copolymer, and further an ethylene/butene multi-block copolymer, or an ethylene/octene multi-block copolymer, and further an ethylene/octene multi-block copolymer.

In one embodiment, or a combination of two or more embodiments, each described herein, the composition is an adhesive composition, and further a hot melt adhesive or a pressure sensitive adhesive, and further a hot melt adhesive.

Also provided is an article comprising at least one component formed from the composition of any one embodiment, or a combination of two or more embodiments, each described herein. In one embodiment, or a combination of two or more embodiments, each described herein, the article is a diaper or a medical garment.

In one embodiment, or a combination of two or more embodiments, each described herein, an inventive composition further comprises a thermoplastic polymer, different from the ethylene/alpha-olefin multi-block interpolymer (component a) in one or more features, such as monomer(s) types, distributions, and/or amounts, density, melt index (I2), Mn, Mw, Mz, MWD, V0.1, V100, RR (V0.1/V100), or any combination thereof, and further in one or more features, such as monomer(s) types, distributions, and/or amounts, density, melt index (I2), Mn, Mw, MWD, or any combination thereof. Polymers include, but not limited to, ethylene-based polymers, propylene-based polymers, and other olefin multi-block interpolymers. Suitable ethylene-based polymers include, but are not limited to, linear low density polyethylene (LLDPE), very low density polyethylene (VLDPE), ultra-low density polyethylene (ULDPE), homogeneously branched linear ethylene-based polymers, and homogeneously branched substantially linear ethylene-based polymers (that is homogeneously branched, long chain branched ethylene polymers). Examples of propylene-based polymers include polypropylene homopolymers and propylene/ethylene copolymers.

In one embodiment, or a combination of two or more embodiments, each described herein, the composition comprises only one ethylene/alpha-olefin multi-block interpolymer for component a.

## Ethylene/Alpha-Olefin Multi-Block Interpolymers

Ethylene/alpha-olefin multi-block interpolymers are characterized by multiple blocks or segments of two or more polymerized monomer units, differing in chemical or physical properties. In some embodiments, the multi-block copolymers can be represented by the following formula: $(AB)_n$, where n is at least 1, preferably an integer greater than 1, such as 2, 3, 4, 5, 10, 15, 20, 30, 40, 50, 60, 70, 80, 90, 100, or higher. Here, "A" represents a hard block or segment, and "B" represents a soft block or segment. Preferably the A segments and the B segments are linked in a substantially linear fashion, as opposed to a substantially branched or substantially star-shaped fashion. In other embodiments, the A segments and the B segments are randomly distributed along the polymer chain. In other words, for example, the block copolymers usually do not have a structure as follows: AAA-AA-BBB-BB. In still other embodiments, the block copolymers do not usually have a third type of block or segment, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The term "hard segments (HS)," as used herein, refer to blocks of polymerized monomer units, in which ethylene is present in an amount $\geq$ 95 mol%, or $\geq$ 98 mol%, or $\geq$ 99 mol%, based on the total number of moles of polymerized monomers in the blocks. In one embodiment, ethylene is present in an amount $\leq$ 99.8 mol%, or $\leq$ 99.6 mol%, or $\leq$ 99.4 mol%, or $\leq$ 99.3 mol%, based on the total number of moles of polymerized monomers in the blocks.

The term "soft segments (SS)," as used herein, refer to blocks of polymerized monomer units, in which ethylene is present in an amount ≤ 90 mol%, or ≤ 88 mol%, or ≤ 86 mol%, or ≤ 84 mol%, based on the total number of moles of polymerized monomers in the blocks. In one embodiment, ethylene is present in an amount ≥ 80 mol%, or ≥ 81 mol%, or ≥ 82 mol%, based on the total number of moles of polymerized monomers in the blocks.

Typically, ethylene comprises 50 mole percent or a majority mole percent of the whole multi-block block copolymer; that is, ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an alpha-olefin having three or more carbon atoms.

As discussed, the ethylene/alpha-olefin multi-block interpolymers comprise two or more chemically distinct regions or segments (referred to as "blocks"), preferably joined in a linear manner. In an embodiment, the blocks differ in the amount or type of incorporated comonomer, density, amount of crystallinity, crystallite size attributable to a polymer of such composition, type or degree of tacticity (isotactic or syndiotactic), region-regularity or regioirregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present ethylene/alpha-olefin multi-block interpolymer is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

The olefin block copolymers, in general, are produced via a chain shuttling process, such as, for example, described in U.S. Patent 7,858,706,. Some chain shuttling agents and related information are listed in Col. 16, line 39, through Col. 19, line 44. Some catalysts are described in Col. 19, line 45, through Col. 46, line 19, and some co-catalysts in Col. 46, line 20, through Col. 51 line 28. Some process features are described in Col 51, line 29, through Col. 54, line 56. See also the following: U.S. Patent 7,608,668; U.S. Patent 7,893,166; and U.S. Patent 7,947,793 as well as US Patent Publication 2010/0197880. See also U.S. Patent 9,243,173.

**Tackifiers**

Tackifiers are known in the art, and may be solids, semi-solids, or liquids at room temperature. Non limiting examples of tackifiers include (1) natural and modified rosins (e.g., gum rosin, wood rosin, tall oil rosin, distilled rosin, hydrogenated rosin, dimerized rosin, and polymerized rosin); (2) glycerol and pentaerythritol esters of natural and modified rosins (e.g., the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin); (3) copolymers and terpolymers of natured terpenes (e.g., styrene/terpene and alpha methyl styrene/terpene); (4) polyterpene resins and hydrogenated polyterpene resins; (5) phenolic modified terpene resins and hydrogenated derivatives thereof (e.g., the resin product resulting from the condensation, in an acidic medium, of a bicyclic terpene and a phenol); (6) aliphatic or cycloaliphatic hydrocarbon resins and the hydrogenated derivatives thereof (e.g., resins resulting from the polymerization of monomers consisting primarily of olefins and diolefins); (7) aromatic hydrocarbon resins and the hydrogenated derivatives thereof; (8) aromatic modified aliphatic or cycloaliphatic hydrocarbon resins and the hydrogenated derivatives thereof; and combinations thereof. In one embodiment, or a combination of two or more embodiments, each described herein, the tackifier is selected from hydrogenated hydrocarbons.

**Oils**

Non-limiting examples of oils include olefin oligomers, low molecular weight polyolefins such as liquid polybutene, phthalates, mineral oils such as naphthenic, paraffinic, or hydrogenated (white) oils (e.g. KAYDOL oil), vegetable and animal oils and their derivatives, petroleum derived oils, and combinations thereof. In one embodiment, or a combination of two or more embodiments, each described herein, the oil is selected from mineral oils, hydrogenated oils or petroleum derived oils.

DEFINITIONS

Unless stated to the contrary, implicit from the context, or customary in the art, all parts and percents are based on weight, and all test methods are current as of the filing date of this disclosure.

The term "composition," as used herein, includes a mixture of materials, which comprise the composition, as well as reaction products and decomposition products formed from the materials of the composition. Any reaction product or decomposition product is typically present in trace or residual amounts.

The term "polymer," as used herein, refers to a polymeric compound prepared by polymerizing monomers, whether of the same or a different type. The generic term polymer thus, includes the term homopolymer (employed to refer to polymers prepared from only one type of monomer, with the understanding that trace amounts of impurities can be incorporated into the polymer structure), and the term interpolymer as defined hereinafter. Trace amounts of impurities, such as catalyst residues, can be incorporated into and/or within the polymer. Typically, a polymer is stabilized with very low amounts ("ppm" amounts) of one or more stabilizers.

The term "interpolymer," as used herein, refers to polymer prepared by the polymerization of at least two different types of monomers. The term interpolymer thus includes the term copolymer (employed to refer to polymers prepared from two different types of monomers) and polymers prepared from more than two different types of monomers.

The term "olefin-based polymer," as used herein, refers to a polymer that comprises, in polymerized form, 50 wt% or a majority weight percent of an olefin, such as ethylene or propylene (based on the weight of the polymer), and optionally may comprise one or more comonomers.

The term "propylene-based polymer," as used herein, refers to a polymer that comprises, in polymerized form, a majority weight percent of propylene (based on the weight of the polymer), and optionally may comprise one or more comonomers.

The term "ethylene-based polymer," as used herein, refers to a polymer that comprises, in polymerized form, 50 wt% or a majority weight percent of ethylene (based on the weight of the polymer), and optionally may comprise one or more comonomers.

The term "ethylene/alpha-olefin multi-block interpolymer," as used herein, refers to a multi-block interpolymer that comprises, in polymerized form, 50 wt% or a majority weight percent of ethylene (based on the weight of the interpolymer), and an alpha-olefin. The term, "ethylene/alpha-olefin multi-block copolymer," as used herein, refers to a multi-block copolymer that comprises, in polymerized form, 50 wt% or a majority amount of ethylene monomer (based on the weight of the copolymer), and an alpha-olefin, as the only two monomer types. See prior discussion.

The terms "comprising," "including," "having," and their derivatives, are not intended to exclude the presence of any additional component, step or procedure, whether the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure, not specifically delineated or listed.

**Listing of Some Composition Features**

A] The present invention provides a composition comprising the following:

a) at least one ethylene/alpha-olefin multi-block interpolymer, comprising soft segments (SS) and hard segments (HS), and wherein the interpolymer comprises the following properties:

i) a melt index (I2) $\geq$ 30 dg/min,
ii) a molar ratio of "the alpha-olefin in the SS" to "the alpha-olefin in the HS" $\geq$ 18,
iii) a weight ratio of the SS to the HS $\leq$ 12.0;

b) at least one tackifier and/or at least one oil.

B] The composition of A] above, wherein the ethylene/alpha-olefin multi-block interpolymer (component a) has a melt index (I2) $\geq$ 35, or $\geq$ 40, or $\geq$ 45, or $\geq$ 50, or $\geq$ 55 dg/min.

C] The composition of A] or B] above, wherein the ethylene/alpha-olefin multi-block interpolymer has a melt index (I2) $\leq$ 300, or $\leq$ 250, or $\leq$ 200, or $\leq$ 150, or $\leq$ 140, or $\leq$ 130, or $\leq$ 120, or $\leq$ 110 dg/min.

D] The composition of any one of A]-C] (A] through C]) above, wherein the ethylene/alpha-olefin multi-block interpolymer has a molar ratio of "alpha-olefin in the SS" to "alpha-olefin in the HS" $\geq$ 19, or $\geq$ 20, or $\geq$ 21.

E] The composition of any one of A]-D] above, wherein the ethylene/alpha-olefin multi-block interpolymer has a molar ratio of "alpha-olefin in the SS" to "alpha-olefin in the HS" $\leq$ 100, or $\leq$ 80, or $\leq$ 60, or $\leq$ 50, or $\leq$ 40, or $\leq$ 30.

F] The composition of any one of A]-E] above, wherein the ethylene/alpha-olefin multi-block interpolymer has an amount of alpha-olefin in the HS $\leq$ 0.90 mol%, or $\leq$ 0.88 mol%, or $\leq$ 0.86 mol%, or $\leq$ 0.84 mol%, based on the total moles of monomers in the HS.

G] The composition of any one of A]-F] above, wherein the ethylene/alpha-olefin multi-block interpolymer has an amount of alpha-olefin in the HS $\geq$ 0.50 mol%, or $\geq$ 0.55 mol%, or $\geq$ 0.60 mol%, or $\geq$ 0.65 mol%, or $\geq$ 0.70 mol%, based on the total moles of monomers in the HS.

H] The composition of any one of A]-G] above, wherein the ethylene/alpha-olefin multi-block interpolymer has an amount of alpha-olefin in the SS $\leq$ 20.0 mol%, or $\leq$ 19.5 mol%, or $\leq$ 19.0 mol%, or $\leq$ 18.5 mol%, or $\leq$ 18.0 mol%, or $\leq$ 17.8 mol%, or $\leq$ 17.6 mol%, or $\leq$ 17.5 mol%, based on the total moles of monomers in the SS.

I] The composition of any one of A]-H] above, wherein the ethylene/alpha-olefin multi-block interpolymer has an amount of alpha-olefin in the SS $\geq$ 15.0 mol%, or $\geq$ 15.5 mol%, or $\geq$ 16.0 mol%, or $\geq$ 16.5 mol%, or $\geq$ 17.0 mol%, based on the total moles of monomers in the SS.

J] The composition of any one of A]-I] above, wherein the ethylene/alpha-olefin multi-block interpolymer has a weight ratio of SS to HS $\leq$ 11.8, or $\leq$ 11.6, or $\leq$ 11.4, or $\leq$ 11.2, or $\leq$ 11.0, or $\leq$ 10.8, or $\leq$ 10.6, or $\leq$ 10.4, or $\leq$ 10.2.

K] The composition of any one of A]-J] above, wherein the ethylene/alpha-olefin multi-block interpolymer has a weight ratio of SS to HS $\geq$ 5.0, or $\geq$ 5.5, or $\geq$ 6.0, or $\leq$ 6.2, or $\geq$ 6.4, or $\geq$ 6.6, or $\geq$ 6.8, or $\geq$ 7.0, or $\geq$ 7.2.

L] The composition of any one of A]-K] above, wherein the ethylene/alpha-olefin multi-block interpolymer has an amount of SS $\leq$ 98 wt%, or $\leq$ 96 wt%, or $\leq$ 94 wt%, or $\leq$ 92 wt%, based on the sum weight of the SS and HS.

M] The composition of any one of A]-L] above, wherein the ethylene/alpha-olefin multi-block interpolymer has an amount of SS $\geq$ 70 wt%, or $\geq$ 75 wt%, or $\geq$ 80 wt%, or $\leq$ 82 wt%, or $\geq$ 84 wt%, or $\geq$ 86 wt%, or $\geq$ 88 wt%, based on the sum weight of the SS and HS.

N] The composition of any one of A]-M] above, wherein the ethylene/alpha-olefin multi-block interpolymer has an amount of HS $\leq$ 20 wt%, or $\leq$ 18 wt%, or $\leq$ 16 wt%, or $\leq$ 14 wt%, or $\leq$ 12 wt%, based on the sum weight of the SS and HS.

O] The composition of any one of A]-N] above, wherein the ethylene/alpha-olefin multi-block interpolymer has an amount of HS $\geq$ 7 wt%, or $\geq$ 8 wt%, or $\geq$ 9 wt%, based on the sum weight of the SS and HS.

P] The composition of any one of A]-O] above, wherein the ethylene/alpha-olefin multi-block interpolymer has a total amount of alpha-olefin $\geq$ 10 mol%, or $\geq$ 11 mol%, or $\geq$ 12 mol%, or $\geq$ 13 mol%, or $\geq$ 14 mol%, or $\geq$ 15 mol%, based on the total moles of monomers in the interpolymer.

Q] The composition of any one of A]-P] above, wherein the ethylene/alpha-olefin multi-block interpolymer has a total amount of alpha-olefin $\leq$ 50 mol%, or $\leq$ 40 mol%, or $\leq$ 30 mol%, or $\leq$ 25 mol%, or $\leq$ 20 mol%, or $\leq$ 18 mol%, or $\leq$ 16 mol%, based on the total moles of monomers in the interpolymer.

R] The composition of any one of A]-Q] above, wherein the ethylene/alpha-olefin multi-block interpolymer has a density $\geq$ 0.856 g/cc, or $\geq$ 0.858 g/cc, or $\geq$ 0.860 g/cc, or $\geq$ 0.862 g/cc, or $\geq$ 0.863 g/cc, or $\geq$ 0.864 g/cc, or $\geq$ 0.865 g/cc, or $\geq$ 0.866 g/cc, or $\geq$ 0.867 g/cc, (1 cc = 1 cm$^3$).

S] The composition of any one of A]-R] above, wherein the ethylene/alpha-olefin multi-block interpolymer has a density $\leq$ 0.874 g/cc, or $\leq$ 0.873 g/cc, or $\leq$ 0.872 g/cc, or $\leq$ 0.871 g/cc, or $\leq$ 0.870 g/cc, or $\leq$ 0.869 g/cc.

T] The composition of any one of A]-S] above, wherein, the ethylene/alpha-olefin multi-block interpolymer has a molecular weight distribution MWD (= Mw/Mn) $\geq$ 1.5, or $\geq$ 1.6, or $\geq$ 1.7, or $\geq$ 1.8, or $\geq$ 1.9, or $\geq$ 2.0, or $\geq$ 2.1.

U] The composition of any one of A]-T] above, wherein the ethylene/alpha-olefin multi-block interpolymer has a molecular weight distribution MWD $\leq$ 3.0, or $\leq$ 2.9, or $\leq$ 2.8, or $\leq$ 2.7, or $\leq$ 2.6, or $\leq$ 2.5, or $\leq$ 2.4, or $\leq$ 2.3, or $\leq$ 2.2.

V] The composition of any one of A]-U] above, wherein the ethylene/alpha-olefin multi-block interpolymer has a number average molecular weight Mn $\geq$ 14,000 g/mol, or $\geq$ 15,000 g/mol, or $\geq$ 16,000 g/mol, or $\geq$ 17,000 g/mol, or $\geq$ 18,000 g/mol.

W] The composition of any one of A]-V] above, wherein the ethylene/alpha-olefin multi-block interpolymer has a number average molecular weight Mn $\leq$ 30,000 g/mol, or $\leq$ 28,000 g/mol, or $\leq$ 26,000 g/mol, or $\leq$ 24,000 g/mol, or $\leq$ 22,000 g/mol.

X] The composition of any one of A]-W] above, wherein the ethylene/alpha-olefin multi-block interpolymer has a weight average molecular weight Mw $\geq$ 30,000 g/mol, or $\geq$ 32,000 g/mol, or $\geq$ 34,000 g/mol, or $\geq$ 36,000 g/mol, or $\geq$ 38,000 g/mol.

Y] The composition of any one of A]-X] above, wherein the ethylene/alpha-olefin multi-block interpolymer has a weight average molecular weight Mw $\leq$ 60,000 g/mol, or $\leq$ 58,000 g/mol, or $\leq$ 56,000 g/mol, or $\leq$ 54,000 g/mol, or $\leq$ 52,000 g/mol, or $\leq$ 50,000 g/mol, or $\leq$ 48,000 g/mol, or $\leq$ 46,000 g/mol.

Z] The composition of any one of A]-Y] above, wherein the composition comprises at least one tackifier or at least one oil.

AA] The composition of any one of A]-Y] above, wherein the composition comprises at least one tackifier and at least one oil.

BB] The composition of any one of A]-Y] or AA] above, wherein the composition comprises at least one tackifier and at least one oil, and the weight ratio of the at least one tackifier to the at least one oil is $\geq$ 2.0, or $\geq$ 2.5, $\geq$ 3.0, or $\geq$ 3.5, or $\geq$ 4.0.

CC] The composition of any one of A]-Y], AA] or BB] above, wherein the composition comprises at least one tackifier and at least one oil, and the weight ratio of the at least one tackifier to the at least one oil is $\leq$ 6.0, or $\leq$ 5.5, or $\leq$ 5.0, or $\leq$ 4.5.

DD] The composition of any one of A]-CC] above, wherein the composition comprises at least one tackifier and optionally at least one oil, and the weight ratio of the at least one tackifier to the at least one ethylene/alpha-olefin multi-block interpolymer is $\geq$ 0.8, or $\geq$ 1.0, $\geq$ 1.2, or $\geq$ 1.4.

EE] The composition of any one of A]-DD] above, wherein the composition comprises at least one tackifier and optionally at least one oil, and the weight ratio of the at least one tackifier to the at least one ethylene/alpha-olefin multi-block interpolymer is ≤ 3.0, or ≤ 2.8, or ≤ 2.6, or ≤ 2.4, or ≤ 2.2, or ≤ 2.0, or ≤ 1.8, or ≤ 1.6.

FF] The composition of any one of A]-EE] above, wherein the composition comprises at least one oil and optionally at least one tackifier, and the weight ratio of the at least one ethylene/alpha-olefin multi-block interpolymer to the at least one oil is ≥ 2.0, or ≥ 2.2, or ≥ 2.4, or ≥ 2.5, or ≥ 2.6, or ≥ 2.7.

GG] The composition of any one of A]-FF] above, wherein the composition comprises at least one oil and optionally at least one tackifier, and the weight ratio of the at least one ethylene/alpha-olefin multi-block interpolymer to the at least one oil is ≤ 4.0, or ≤ 3.8, or ≤ 3.6, or ≤ 3.4, or ≤ 3.2, or ≤ 3.0.

HH] The composition of any one of A]-GG] above, wherein the composition comprises ≥ 20 wt%, or ≥ 22 wt%, or ≥ 24 wt%, or ≥ 26 wt%, or ≥ 28 wt%, or ≥ 30 wt%, or ≥ 32 wt%, or ≥ 34 wt% of the at least one ethylene/alpha-olefin multi-block interpolymer, based on the weight of the composition.

II] The composition of any one of A]-HH] above, wherein the composition comprises ≤ 50 wt%, or ≤ 48 wt%, or ≤ 46 wt%, or ≤ 44 wt%, or ≤ 42 wt%, or ≤ 40 wt%, or ≤ 38 wt%, or ≤ 36 wt% of the at least one ethylene/alpha-olefin multi-block interpolymer, based on the weight of the composition.

JJ] The composition of any one of A]-II] above, wherein the composition comprises at least one tackifier, and further comprises ≥ 40 wt%, or ≥ 42 wt%, or ≥ 44 wt%, or ≥ 46 wt%, or ≥ 48 wt%, or ≥ 50 wt%, or ≥ 51 wt%, or ≥ 52 wt% of the at least one tackifier, based on the weight of the composition.

KK] The composition of any one of A]-JJ] above, wherein the composition comprises at least one tackifier, and further comprises ≤ 70 wt%, or ≤ 65 wt%, or ≤ 60 wt%, or ≤ 58 wt%, or ≤ 56 wt%, or ≤ 54 wt% of the at least one tackifier, based on the weight of the composition.

LL] The composition of any one of A]-KK] above, wherein the composition comprises at least one oil, and further comprises ≥ 6 wt%, or ≥ 8 wt%, or ≥ 10 wt%, or ≥ 11 wt%, or ≥ 12 wt% of the at least one oil, based on the weight of the composition.

MM] The composition of any one of A]-LL] above, wherein the composition comprises at least one oil, and further comprises ≤ 20 wt%, or ≤ 18 wt%, or ≤ 16 wt%, or ≤ 14 wt% of the at least one oil, based on the weight of the composition.

NN] The composition of any one of A]-MM] above, wherein the composition comprises ≥ 98.5 wt%, ≥ 99.0 wt%, or ≥ 99.1 wt%, or ≥ 99.2 wt%, or ≥ 99.3 wt%, or ≥ 99.4 wt% of the sum of the at least one ethylene/alpha-olefin multi-block interpolymer, the at least one tackifier and the at least one oil, based on the weight of the composition.

OO] The composition of any one of A]-NN] above, wherein the composition comprises ≤ 100.0 wt%, or ≤ 99.9 wt%, ≤ 99.8 wt%, or ≤ 99.7 wt%, or ≤ 99.6 wt%, or ≤ 99.5 wt% of the sum of the at least one ethylene/alpha-olefin multi-block interpolymer, the at least one tackifier and the at least one oil based on the weight of the composition.

PP] The composition of any one of A]-OO] above, wherein the composition has a viscosity (177°C) ≥ 2 Pa*s (2,000 cP), or ≥ 2.4 Pa*s (2,400 cP), or ≥ 2.6 Pa*s (2,600 cP), or ≥ 2.8 Pa*s (2,800 cP), or ≥ 3 Pa*s (3,000 cP), or ≥ 3.2 Pa*s (3,200 cP).

QQ] The composition of any one of A]-PP] above, wherein the composition has a viscosity (177°C) ≤ 15 Pa*s (15,000 cP), or ≤ 14 Pa*s (14,000 cP), or ≤ 13 Pa*s (13,000 cP), or ≤ 12 Pa*s (12,000 cP), or ≤ 11 Pa*s (11,000 cP), or ≤ 10 Pa*s (10,000 cP), or ≤ 9 Pa*s (9,000 cP), or ≤ 8 Pa*s (8,000 cP), or ≤ 7 Pa*s (7,000 cP), or ≤ 6.8 Pa*s (6,800 cP), or ≤ 6.6 Pa*s (6,600 cP), or ≤ 6.4 Pa*s (6,400 cP), or ≤ 6.2 Pa*s (6,200 cP).

RR] The composition of any one of A]-QQ] above, wherein the composition has a Loop Tack ≥ 24 N, or ≥ 26 N, or ≥ 28 N, or ≥ 30 N, or ≥ 32 N.

SS] The composition of any one of A]-RR] above, wherein the composition has a Loop Tack ≤ 100 N, or ≤ 90N, or ≤ 80 N, or ≤ 70N, or ≤ 60 N, or ≤ 50 N, or ≤ 45N.

TT] The composition of any one of A]-SS] above, wherein the composition has a 90 Degree Peel ≥ 0.89 kg/cm (5.0 lb/in), or ≥ 1.1 kg/cm (6.0 lb/in), or ≥ 1.2 kg/cm (6.5 lb/in), or ≥ 1.25 kg/cm (7.0 lb/in), or ≥ 1.3 kg/cm (7.5 lb/in), or ≥ 1.4 kg/cm (8.0 lb/in).

UU] The composition of any one of A]-TT] above, wherein the composition has a 90 Degree Peel ≤ 8.9 kg/cm (50 lb/in), or ≤ 7.1 kg/cm (40 lb/in), or ≤ 5.4 kg/cm (30 lb/in), or ≤ 3.6 kg/cm (20 lb/in), or ≤ 2.7 kg/cm (15 lb/in).

VV] The composition of any one of A]-UU] above, wherein the composition meets the following relationship: [(Loop Tack (N)/(Viscosity (mPa*s)) x (1000 (mPa*s/N))] = [(Loop Tack (N)/(Viscosity (Cp)) x (1000 (Cp/N))] ≥ 4.0, or ≥ 4.2, or ≥ 4.4, or ≥ 4.6, or ≥ 4.8, or ≥ 5.0, or ≥ 5.2. Viscosity measured at 177°C.

WW] The composition of any one of A]-VV] above, wherein the composition meets the following relationship: [(Loop Tack (N)/(Viscosity (mPa*s)) x (1000 (mPa*s/N))] = [(Loop Tack (N)/(Viscosity (cP)) x (1000 (cP/N))] ≤ 20, or ≤ 18, or ≤ 16, or ≤ 14, or ≤ 12. Viscosity measured at 177°C.

XX] The composition of any one of A]-WW] above, wherein the composition meets the following relationship: [(90 Degree Peel (0.18 kg/cm)/(Viscosity (mPa*s)) x (1000 (mPa*s·5.6 cm/kg))] = [(90 Degree Peel (lb/in)/(Viscosity (cP)) x (1000 (cP·in/lb))] ≥ 1.0, or ≥ 1.1, or ≥ 1.2, or ≥ 1.3. Viscosity measured at 177°C.

YY] The composition of any one of A]-XX] above, wherein the composition meets the following relationship: [(90 Degree Peel (0.18 kg/cm)/(Viscosity (mPa*s)) x (1000 (mPa*s·5.6 cm/kg))] = [(90 Degree Peel (lb/in)/(Viscosity (cP)) x (1000 (cP·in/lb))] ≤ 4.0, or ≤ 3.5, or ≤ 3.0, or ≤ 2.9. Viscosity measured at 177°C.

ZZ] The composition of any one of A]-YY] above, wherein the alpha-olefin of the ethylene/alpha-olefin multi-block interpolymer (component a) is a C3-C20 alpha-olefin, and further a C3-C10 alpha-olefin.

A3] The composition of any one of A]-ZZ] above, wherein the alpha-olefin of the ethylene/alpha-olefin multi-block interpolymer (component a) is selected from propylene, 1-butene, 1-pentene, 1-hexene or 1-octene, and further propylene, 1-butene or 1-octene, and

further 1-butene or 1-octene, and further 1-octene.

B3] The composition of any one of A]-A3] above, wherein the ethylene/alpha-olefin multi-block interpolymer is an ethylene/alpha-olefin multi-block copolymer.

C3] The composition of any one of A]-B3] above, wherein the ethylene/alpha-olefin multi-block interpolymer is selected from the following: an ethylene/propylene multi-block copolymer, an ethylene/butene multi-block copolymer, or an ethylene/octene multi-block copolymer, and further an ethylene/butene multi-block copolymer, or an ethylene/octene multi-block copolymer, and further an ethylene/octene multi-block copolymer.

D3] The composition of any one of A]-C3] above, wherein the composition further comprises a thermoplastic polymer, different from the ethylene/alpha-olefin multi-block interpolymer (component a), in one or more features, such as monomer(s) types, distributions, and/or amounts, density, melt index (I2), Mn, Mw, Mz, MWD, Mooney Viscosity, V0.1, V100, RR, or any combination thereof, and further in one or more features, such as monomer(s) types, distributions, and/or amounts, density, melt index (I2), and/or amounts, Mn, Mw, MWD, or any combination thereof.

E3] The composition of any one of A]-D3] above, wherein the composition comprises only one the ethylene/alpha-olefin multi-block interpolymer for component a.

F3] The composition of any one of A]-E3] above, wherein the composition comprises ≥ 98.5 wt%, ≥ 99.0 wt%, or ≥ 99.1 wt%, or ≥ 99.2 wt%, or ≥ 99.3 wt%, or ≥ 99.4 wt% of the sum of components a and b, based on the weight of the composition.

G3] The composition of any one of A]-F3] above, wherein the composition comprises ≤ 100.0 wt%, or ≤ 99.9 wt%, ≤ 99.8 wt%, or ≤ 99.7 wt%, or ≤ 99.6 wt%, or ≤ 99.5 wt% of the sum of components a and b, based on the weight of the composition.

H3] The composition of any one of A]-G3] above, wherein the composition is an adhesive composition, and further a pressure sensitive adhesive or a hot melt adhesive, and further a hot melt adhesive.

I3] An article comprising at least one component formed from the composition of any one of A]-H3] above.

J3] The article of I3] above, wherein the article is a diaper or a medical garment.

TEST METHODS

**Gel Permeation Chromatography (GPC)**

The chromatographic system consisted of a PolymerChar GPC-IR (Valencia, Spain) high temperature GPC chromatograph, equipped with an internal IR5 infra-red detector (IR5). The autosampler oven compartment was set at 160°C, and the column compartment was set at 150°C. The columns were four AGILENT "Mixed A" 30 cm, 20-micron linear mixed-bed columns. The chromatographic solvent was 1,2,4-trichlorobenzene, which contained 200 ppm of butylated hydroxytoluene (BHT). The solvent source was nitrogen sparged. The injection volume was 200 microliters, and the flow rate was 1.0 milliliters/minute.

Calibration of the GPC column set was performed with 21 "narrow molecular weight distribution" polystyrene standards, with molecular weights ranging from 580 to 8,400,000, and which were arranged in six "cocktail" mixtures, with at least a decade of separation between individual molecular weights. The standards were purchased from Agilent Technologies. The polystyrene standards were prepared at "0.025 grams in 50 milliliters of solvent," for molecular weights equal to, or greater than, 1,000,000, and at "0.05 grams in 50 milliliters of solvent," for molecular weights less than 1,000,000. The polystyrene standards were dissolved at 80°C, with gentle agitation, for 30 minutes. The polystyrene standard peak molecular weights were converted to polyethylene molecular weights using Equation 1 (as described in Williams and Ward, J. Polym. Sci., Polym. Let., 6, 621 (1968)):

$$M_{polyethylene} = A \times \left(M_{polystyrene}\right)^{B} \qquad (EQ1),$$

where M is the molecular weight, A has a value of 0.4315 and B is equal to 1.0.

A fifth order polynomial was used to fit the respective polyethylene-equivalent calibration points. A small adjustment to A (from approximately 0.375 to 0.445) was made to correct for column resolution and band-broadening effects, such that linear homopolymer polyethylene standard is obtained at 120,000 Mw.

The total plate count of the GPC column set was performed with decane (prepared at "0.04 g in 50 milliliters of TCB," and dissolved for 20 minutes with gentle agitation.) The plate count (Equation 2) and symmetry (Equation 3) were measured on a 200 microliter injection according to the following equations:

$$Plate\ Count = 5.54 * \left( \frac{(\ RV_{Peak\ Max}}{Peak\ Width\ at\ \frac{1}{2}height} \right)^2 \quad (EQ2),$$

where RV is the retention volume in milliliters, the peak width is in milliliters, the peak max is the maximum height of the peak, and ½ height is ½ height of the peak maximum; and

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \quad (EQ3),$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples were prepared in a semi-automatic manner with the PolymerChar "Instrument Control Software," where the samples were weight-targeted at "2 mg/ml," and the solvent (contained 200 ppm BHT) was added to a pre nitrogen-sparged, septa-capped vial, via the PolymerChar high temperature autosampler. The samples were dissolved for two hours at 160°C under "low speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 4-6, using the PolymerChar GPCOne™ software, the baselinesubtracted IR chromatogram at each equally-spaced data collection point (i), and the polyethylene equivalent molecular weight obtained from the narrow standard calibration curve for the point (i) from Equation 1. Equations 4-6 are as follows:

$$Mn_{(GPC)} = \frac{\sum^i IR_i}{\sum^i \left( IR_i \Big/ M_{polyethylene_i} \right)} \quad (EQ\ 4),$$

$$Mw_{(GPC)} = \frac{\sum^i \left( IR_i * M_{polyethylene_i} \right)}{\sum^i IR_i} \quad (EQ\ 5),$$

and

$$Mz_{(GPC)} = \frac{\sum^i \left( IR_i * M_{polyethylene_i}^2 \right)}{\sum^i \left( IR_i * M_{polyethylene_i} \right)} \quad (EQ\ 6).$$

In order to monitor the deviations over time, a flowrate marker (decane) was introduced into each sample, via a micropump controlled with the PolymerChar GPC-IR system. This flowrate marker (FM) was used to linearly correct the pump flow rate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear-shift in flow rate (Flowrate(effective)) for the entire run. To facilitate the highest accuracy of a RV measurement of the flow marker peak, a leastsquares fitting routine was used to fit the peak of the flow marker concentration chromatogram to a quadratic equation. The first derivative of the quadratic equation was then used to solve for the true peak position. After calibrating the system, based on a flow marker peak, the effective flowrate (with respect to the narrow standards calibration) was calculated as Equation 7: Flowrate(effective) = Flowrate(nominal) * (RV(FM Calibrated) / RV(FM Sample)) (EQ7). Processing of the flow marker peak was done via the PolymerChar GPCOne™ Software. Acceptable flowrate correction is such that the effective flowrate should be within +/-0.7% of the nominal flowrate.

**Melt Index**

The melt index I2 of an ethylene-based polymer is measured in accordance with ASTM D-1238, condition 190°C/2.16 kg. The melt flow rate MFR of a propylene-based polymer is measured in accordance with ASTM D-1238, condition 230°C/2.16 kg.

Density

The density of a polymer is measured by preparing the polymer sample according to ASTM D 1928, and then measuring the density according to ASTM D792, Method B, within one hour of sample pressing.

**13C NMR for Determination of the Following: A) Amount of Hard Segments (HS) and Amount of Soft Segments (SS), B) Amount of Alpha-Olefin in Hard Segments (HS) and Amount of Alpha-Olefin in Soft Segments (SS), C) the Total Amount of Alpha-Olefin in the Ethylene/Alpha-Olefin Multi-Block Interpolymer**

13C NMR spectroscopy is one of a number of techniques known in the art for measuring comonomer incorporation into a polymer. An example of this technique is described for the determination of comonomer content for ethylene/alpha-olefin copolymers in Randall (Journal of Macromolecular Science, Reviews in Macromolecular Chemistry and Physics, C29 (2 & 3), 201-317 (1989)),. The basic procedure for determining the comonomer content of an ethylene/alpha-olefin interpolymer involves obtaining a 13C NMR spectrum, under conditions where the intensity of the peaks, corresponding to the different carbons in a sample, is directly proportional to the total number of contributing nuclei in the sample. Methods for ensuring this proportionality are known in the art, and involve allowance for sufficient time for relaxation after a pulse, the use of gated-decoupling techniques, relaxation agents, and the like. The relative intensity of a peak or group of peaks is obtained, in practice, from its computer-generated integral. After obtaining the spectrum and integrating the peaks, those peaks associated with the comonomer are assigned. This assignment can be made by reference to known spectra or literature, or by synthesis and analysis of model compounds, or by the use of isotopically labeled comonomers. The mole % comonomer can be determined by the ratio of the integrals corresponding to the number of moles of comonomer to the integrals corresponding to the number of moles of all of the monomers in the interpolymer, as described in the aforementioned Randall reference.

Since the hard segment generally has less than about 2.0 wt% comonomer, its major contribution to the spectrum is only for the integral at about 30 ppm. The hard segment contribution to the peaks "not at 30 ppm" is assumed negligible at the start of the analysis. So, for the starting point, the integrals of the peaks "not at 30 ppm" are assumed to come from the soft segment only. These integrals are fit to a first order Markovian statistical model for copolymers, using a linear least squares minimization, thus generating fitting parameters (i.e., probability of octene insertion after octene, $P_{oo}$, and probability of octene insertion after ethylene, $P_{eo}$) that are used to compute the soft segment contribution to the 30 ppm peak. The difference between the "total measured 30 ppm peak integral" and the "computed soft segment integral contribution to the 30 ppm peak" is the contribution from the hard segment. Therefore, the experimental spectrum has now been deconvoluted into two integral lists describing the soft segment and hard segment, respectively. The calculation of weight percentage of the hard segment is straight forward, and calculated by the ratio of the sum of integrals for the hard segment spectrum to the sum of integrals for the overall spectrum.

From the deconvoluted soft segment integral list, the comonomer composition can be calculated according to the method of Randall, for example. From the comonomer composition of the overall spectrum and the comonomer composition of the soft segment, one can use mass balance to compute the comonomer composition of the hard segment. From the comonomer composition of the hard segment, Bernoullian statistics is used to calculate the contribution of the hard segment to the integrals of "non 30 ppm peaks." There is usually so little octene, typically from about 0 to about 1 mol%, in the hard segment, that Bernoullian statistics is a valid and robust approximation. These contributions are then subtracted out from the experimental integrals of the "non 30 ppm peaks." The resulting "non 30 ppm peak" integrals are then fitted to a first order Markovian statistics model for copolymers as described in the above paragraph. The iterative process is performed in the following manner: fit total "non 30 ppm peaks" then compute soft segment contribution to 30 ppm peak; then compute soft/hard segment split and then compute hard segment contribution to "non 30 ppm peaks;" then correct for hard segment contribution to "non 30 ppm peaks" and fit resulting "non 30 ppm peaks." This is repeated until the values for soft/hard segment split converge to a minimum error function. The final comonomer compositions for each segment are reported.

Validation of the measurement is accomplished through the analysis of several in situ polymer blends. By design of the polymerization and catalyst concentrations, the expected split is compared to the measured NMR split values. Table A shows the chemical shift assignments for ethylene octene polymers.

TABLE A

| Chemical Shift Assignments for Ethylene/Octene Copolymers | |
|---|---|
| 41-40.6 ppm | OOOE/EOOO $\alpha\alpha$ CH2 |
| 40.5-40.0 ppm | EOOE $\alpha\alpha$ CH2 |
| 38.9-37.9 ppm | EOE CH |
| 36.2-35.7 ppm | OOE center CH |
| 35.6-34.7 ppm | OEO $\alpha\gamma$, OOO center 6B, OOEE $\alpha\delta$+, OOE center 6B CH2 |
| 34.7-34.1 ppm | EOE $\alpha\delta$+, EOE 6B CH2 |
| 33.9-33.5 ppm | OOO center CH |
| 32.5-32.1 ppm | 3B CH2 |
| 31.5-30.8 ppm | OEEO $\gamma\gamma$ CH2 |
| 30.8-30.3 ppm | OE $\gamma\delta$+ CH2 |
| 30.3-29.0 ppm | 4B, EEE $\delta$+$\delta$+ CH2 |
| 28.0-26.5 ppm | OE $\beta\delta$+ 5B |
| 25.1-23.9 ppm | OEO $\beta\beta$ |
| 23.0-22.6 ppm | 2B |
| 14.5-14.0 ppm | 1B |

The following experimental procedure was used. Each sample was prepared by adding approximately 2.6 grams of a 50/50 mixture of tetrachloroethane-d2/orthodichloro-benzene, which was 0.025M in chromium acetylacetonate (relaxation agent), to 0.2 gram sample, in a 10 mm NMR tube. The sample was dissolved and homogenized by heating the tube and its contents to 150°C. The data were collected using a Bruker 400 MHz spectro-meter, equipped with a Bruker Dual DUL hightemperature CryoProbe. The data were acquired using 160 scans per data file, a 6 second pulse repetition delay, and with a sample temperature of 120°C. The acquisitions were carried out using spectral width of 25,000 Hz and a file size of 32K data points.

**Adhesive Viscosity**

The viscosity of each composition (8-9 grams) was measured using a Brookfield Digital Viscometer, model DV-I prime, with a Brookfield temperature controller and thermosel, following ASTM standard D1986. Spindle SC4-31 was used, and the temperature was 177°C.

**Loop Tack**

Loop tack was measured on stainless steel plates (5.1 cm x 15.2 cm (2 inch x 6 inch), available from Chem Instruments), using an INSTRON, at a "30.5 cm/min (12 inch/min)" test rate, following PSTC-16, Method A. Each adhesive formulation was coated onto a corona treated polyester film (MYLAR) to a coating weight of $20 \pm 2$ g/m$^2$, using a hot melt knife coater at 150°C, to form a tape. Each tape was faced with a CHEMINSTRUMENTS RP-12 Silicone Release Liner (to protect adhesive layer before testing), and cut into 2.54 cm (one-inch) wide strips. The adhesive side of the tape was contacted to the stainless steel plate, in accordance with PSTC-16, Method A. At least three test samples were tested, and the average reported.

**90 Degree Peel**

Peel adhesion was measured on stainless steel plates (see above), using an INSTRON, at a "30.5 cm/min (12 in/min)" test rate, following PSTC-101, Method F. Each adhesive formulation was coated onto a corona treated polyester film (MYLAR) to a coating weight of $20 \pm 2$ g/m$^2$, using a hot melt knife coater at 150°C, to form a tape. Each tape was faced with a CHEMINSTRUMENTS RP-12 Silicone Release Liner (to protect adhesive layer before testing), and cut into 2.54 cm (one-inch) wide strips. The adhesive side of the tape was contacted to the stainless steel plate, in accordance with PSTC-101, Method F. At least three test samples were tested, and the average reported.

EXPERIMENTAL

**Polymer Syntheses and Properties**

Continuous solution polymerizations were carried out in a batch reactor (for example, a CSTR), equipped with an internal stirrer. Purified mixed alkanes solvent (ISOPAR E available from ExxonMobil), monomers, and molecular weight regulator (hydrogen or chain shuttling agent) were supplied to a "3.8 L" reactor, equipped with a jacket for temperature control. The solvent feed to the reactor was measured by a mass-flow controller. A pump controlled the solvent flow rate and the pressure to the reactor. At the discharge of the pump, a side stream was taken to provide flush flows for the procatalyst, co-catalyst, and chain shuttling agent (catalyst component solutions) injection lines. These flows were measured and controlled, to maintain an efficient production rate. The remaining solvent was combined with monomers and hydrogen, and fed to the reactor. The temperature of the solvent/monomer solution was controlled by use of a heat exchanger. This solution stream entered the bottom of the reactor.

The catalyst component solutions were metered using pumps and flow meters, combined with the catalyst flush solvent, and introduced into the bottom of the reactor. The reactor was liquid full at "3.4 MPa (500 psig)" with vigorous stirring. Polymer was removed through exit lines at the top of the reactor. The reactor effluent was deactivated with the addition of, and reaction with, a suitable reagent (water), and other additives were added for polymer stabilization. Following catalyst deactivation and additive addition, the polymer was removed from the non-polymer stream by devolatilization. The isolated polymer melt was pelletized and collected. Polymerization conditions are shown in Table 1, and polymer properties are shown in Tables 2A and 2B. In Table 1, each "ppm" amount is based on the weight of the respective catalyst (or co-catalyst) feed solution, and the "wt%" polymer is based on the weight of the contents of the reactor.

As discussed, polymer properties, including those of INFUSE 9807 (The Dow Chemical Company), are shown in Table 2A and Table 2B. In Table 2B, the notation SS refers to soft segments, HS refers to hard segments, and C8 refers to polymerized octene.

Table 1

| Run#: | Unit | OBC #1* | OBC #2** |
|---|---|---|---|
| Total Solvent Flow | kg/hr (lbs/hr) | 13.7 (30.1) | 9.89 (21.8) |
| Fresh Monomer Flow | kg/hr (lbs/hr) | 1.44 (3.18) | 1.44 (3.18) |
| Fresh Comonomer Flow | kg/hr (lbs/hr) | 2.36 (5.20) | 2.17 (4.78) |
| Fresh Hydrogen Flow | sccm | 3.81 | 21.9 |
| Control Temperature | °C | 125 | 127 |
| Polymer Concentration | wt% | 15.6 | 21.8 |
| Production Rate | kg/hr (lbs/hr) | 2.3 (5.06) | 2.41 (5.32) |
| Catalyst-1[A] | | | |
| Catalyst-1 Flow | kg/hr (lbs/hr) | 0.14 (0.308) | 0.144 (0.317) |
| Catalyst-1 Concentration | ppm | 91.6 | 91.6 |
| Catalyst-2[B] | | | |
| Catalyst-2 Concentration | ppm | 14.3 | 14.3 |
| Catalyst-2 Flow | kg/hr (lbs/hr) | 0.081 (0.179) | 0.058 (0.128) |
| Co-Catalyst-1[C] | | | |
| Co-Catalyst-1 Flow | kg/hr (lbs/hr) | 0.131 (0.289) | 0.129 (0.285) |
| Co-Catalyst-1 Concentration | ppm | 922 | 922 |
| Co-Catalyst-2[D] | | | |

(continued)

| Run#: | Unit | OBC #1* | OBC #2** |
|---|---|---|---|
| Co-Catalyst-2 Flow | kg/hr (lbs/hr) | 0.135 (0.298) | 0.135 (0.298) |

*OBC 1 = Ethylene/octene multi-block copolymer #1.

**OBC 2 = Ethylene/octene multi-block copolymer #2.

**A:** [N-[2,6-bis(1-methylethyl)phenyl]-.alpha.-[2-(1-methylethyl)phenyl]-6-(1-naphthalenyl-.kappa.C2)-2-pyridine-methanaminato(2-)-.kappa.NI,.kappa.N2]dimethyl-hafnium (US2011/0262747 and US7524911).

**B:** bis[2,4-bis(1,1-dimethylethyl)-6-[[(2-methylcyclohexyl)imino-.kappa.N]methyl]phenolato-.kappa.O]dimethyl-zirconium (US2011/0262747 and US7524911).

**C:** Amines, bis(hydrogenated tallow alkyl)methyl, tetrakis(pentafluorophenyl)borate(1-).

**D (Chain Shuttling Agent):** diethylzinc/triethylaluminum.

Table 2A: Interpolymer Properties

| | Density (g/cc) | Melt Index (dg/min) | GPC Mn (g/mol) | GPC Mw (g/mol) | GPC Mw/Mn |
|---|---|---|---|---|---|
| INFUSE 9807 | 0.866 | 15 | 28020 | 66550 | 2.4 |
| OBC 1* | 0.867 | 56 | 21145 | 44429 | 2.1 |
| OBC 2** | 0.867 | 106 | 18427 | 38784 | 2.1 |

Table 2B: Interpolymer Properties (13C NMR)

| | C8 Total mol%[a] | C8 Total wt%[b] | C8 in SS mol%[c] | C8 in HS mol%[c] | SS wt%[d] | HS wt%[d] | C8 (in SS) / C8 (in HS) Molar Ratio | (SS)/(HS) Wt. Ratio |
|---|---|---|---|---|---|---|---|---|
| INFUSE 9807 | 15.2 | 41.8 | 17.2 | 0.81 | 89 | 11 | 21 | 8.1 |
| OBC 1 | 15.1 | 41.6 | 17.4 | 0.83 | 88 | 12 | 21 | 7.3 |
| OBC 2 | 15.4 | 42.2 | 17.0 | 0.81 | 91 | 9 | 21 | 10.1 |

**a:** Mole percent of octene in the OBC, and based on the total moles of monomers in the OBC. Determined by 13C NMR.

**b:** Weight percent of octene in the OBC, and determined from the "mole percent of octene in the OBC" from 13C NMR.

**c:** Mole percent of octene in the respective segments (SS or HS) based on the total moles of monomers in the respective segments. Determined by 13C NMR.

**d:** Weight percent of the respective segments (SS of HS), based on sum weight of SS and HS. Determined by 13C NMR.

## Adhesive Composition and Coating

Each adhesive composition contained the following components: 35 wt% OBC + 52.5 wt% Tackifier (REGALITE 1090) + 12.5 wt% Oil (PARALUX 6001). The formulations were prepared, and mixed, via a PARR 4560 mini bench top reactor, with a 4848 Reactor Controller. The formulations were mixed at 150°C and 150 rpm. All ingredients were added into the PARR reactor and mixed for 30 minutes. Each adhesive formulation was coated, at 150°C, onto a corona treated polyester film, to a coating weight of $20 \pm 2$ g/m$^2$. See above "Test Methods" section.

## Adhesive Properties

The viscosity (177°C), "Loop Tack" and "90 Degree Peel" were examined for each composition. The results are shown in Table 3. As seen, each inventive composition had a much lower viscosity, but delivered significantly higher tack and peel values.

Table 3: Adhesive Properties

| Adhesive Example | Interpolymer (OBC) | Viscosity, 177°C (Pa*s (cP)) | Loop Tack (N) | 90 Degree Peel (kg/cm (lb/in)) |
|---|---|---|---|---|
| 1 | OBC 1 | 6.179 (6179) | 32.4 ± 2.2 | 1.5 ± 0.09 (8.4 ± 0.5) |
| 2 | OBC 2 | 3.467 (3467) | 39.8 ± 0.6 | 1.7 ± 0.1 (9.7 ± 0.7) |
| A | INFUSE 9807 | 21.495 (21495) | 18.5 ± 3.0 | 0.73 ± 0.09 (4.1 ± 0.5) |

**Claims**

1. A composition comprising the following:

    a) at least one ethylene/alpha-olefin multi-block interpolymer that comprises soft segments (SS) and hard segments (HS), and wherein the interpolymer comprises the following properties:

    i) a melt index (I2) $\geq$ 30 dg/min,
    ii) a molar ratio of "the alpha-olefin in the SS" to "the alpha-olefin in the HS" $\geq$ 18,
    iii) a weight ratio of the SS to the HS $\leq$ 12.0;

    b) at least one tackifier and/or at least one oil.

2. The composition of claim 1, wherein the ethylene/alpha-olefin multi-block interpolymer has an amount of alpha-olefin $\geq$ 10 mol%, based on the total moles of monomers in the interpolymer.

3. The composition of claim 1 or claim 2, wherein the ethylene/alpha-olefin multi-block interpolymer has a density $\geq$ 0.856 g/cc.

4. The composition of any one of claims 1-3, wherein the ethylene/alpha-olefin multi-block interpolymer has a density $\leq$ 0.874 g/cc.

5. The composition of any one of claims 1-4, wherein, the ethylene/alpha-olefin multi-block interpolymer has a molecular weight distribution MWD (= Mw/Mn) $\geq$ 1.5.

6. The composition of any one of claims 1-5, wherein, the ethylene/alpha-olefin multi-block interpolymer has a molecular weight distribution MWD (= Mw/Mn) $\leq$ 3.0.

7. The composition of any one of claims 1-6, wherein the composition comprises at least one tackifier and at least one oil.

8. The composition of any one of claims 1-7, wherein the composition comprises $\geq$ 98.5 wt% of the sum of components a and b, based on the weight of the composition.

9. The composition of any one of claims 1-8, wherein the composition has a viscosity (177°C) $\geq$ 2 Pa*s (2,000 cP); wherein viscosity is measured using a Brookfield Digital Viscometer, model DV-I prime, with a Brookfield temperature controller and thermosel, following ASTM standard D1986.

10. The composition of any one of claims 1-9, wherein the composition has a viscosity (177°C) $\leq$ 15 Pa*s (15,000 cP); wherein viscosity is measured using a Brookfield Digital Viscometer, model DV-I prime, with a Brookfield temperature controller and thermosel, following ASTM standard D1986.

11. The composition of any one of claims 1-10, wherein the composition meets the following relationship: [(Loop Tack (N)/(Viscosity (mPa*s)) x (1000 (mPa*s/N))] = [(Loop Tack (N)/(Viscosity (cP)) x (1000 (cP/N))] $\geq$ 4.0; wherein viscosity is measured using a Brookfield Digital Viscometer, model DV-I prime, with a Brookfield temperature controller and thermosel, following ASTM standard D1986; and Loop Tack is measured as described in the description.

12. The composition of any one of claims 1-11, wherein the composition meets the following relationship: [(90 Degree Peel (0.18 kg/cm)/(Viscosity (mPa*s)) x (1000 (mPa*s·5.6 cm/kg))] = [(90 Degree Peel (lb/in)/(Viscosity (cP)) x (1000

(cP·in/lb))] $\geq$ 1.0; wherein viscosity is measured using a Brookfield Digital Viscometer, model DV-I prime, with a Brookfield temperature controller and thermosel, following ASTM standard D1986; and 90 Degree Peel is measured as described in the description.

13. The composition of any one of claims 1-12, wherein the alpha-olefin of the ethylene/alpha-olefin multi-block interpolymer (component a) is a C3-C20 alpha-olefin.

14. The composition of any one of claims 1-13, wherein the ethylene/alpha-olefin multi-block interpolymer of component a is an ethylene/alpha-olefin multi-block copolymer.

15. An article comprising at least one component formed from the composition of any one of claims 1-14.

**Patentansprüche**

1. Zusammensetzung, umfassend das Folgende:

   a) mindestens ein Ethylen/Alpha-Olefin-Multiblockinterpolymer, das weiche Segmente (SS) und harte Segmente (HS) umfasst, und wobei das Interpolymer die folgenden Eigenschaften umfasst:

   i) einen Schmelzindex (I2) $\geq$ 30 dg/min,
   ii) ein Molverhältnis von "dem Alpha-Olefin in dem SS" zu "dem Alpha-Olefin in dem HS" $\geq$ 18,
   iii) ein Gewichtsverhältnis von dem SS zu dem HS $\leq$ 12,0;

   b) mindestens einen Klebrigmacher und/oder mindestens ein Öl.

2. Zusammensetzung nach Anspruch 1, wobei das Ethylen/Alpha-Olefin-Multiblockinterpolymer eine Menge an Alpha-Olefin $\geq$ 10 Mol-%, bezogen auf die Gesamtmole der Monomere in dem Interpolymer, aufweist.

3. Zusammensetzung von Anspruch 1 oder Anspruch 2, wobei das Ethylen/Alpha-Olefin-Multiblockinterpolymer eine Dichte $\geq$ 0,856 g/cm$^3$ aufweist.

4. Zusammensetzung nach einem der Ansprüche 1 bis 3, wobei das Ethylen/Alpha-Olefin-Multiblockinterpolymer eine Dichte $\leq$ 0,874 g/cm$^3$ aufweist.

5. Zusammensetzung nach einem der Ansprüche 1 bis 4, wobei das Ethylen/Alpha-Olefin-Multiblockinterpolymer eine Molekulargewichtsverteilung MWD (= Mw/Mn) $\geq$ 1,5 aufweist.

6. Zusammensetzung nach einem der Ansprüche 1 bis 5, wobei das Ethylen/Alpha-Olefin-Multiblockinterpolymer eine Molekulargewichtsverteilung MWD (= Mw/Mn) $\leq$ 3,0 aufweist.

7. Zusammensetzung nach einem der Ansprüche 1 bis 6, wobei die Zusammensetzung mindestens einen Klebrigmacher und mindestens ein Öl umfasst.

8. Zusammensetzung nach einem der Ansprüche 1 bis 7, wobei die Zusammensetzung zu $\geq$ 98,5 Gew.-% die Summe der Komponenten a und b umfasst, bezogen auf das Gewicht der Zusammensetzung.

9. Zusammensetzung nach einem der Ansprüche 1 bis 8, wobei die Zusammensetzung eine Viskosität (177 °C) $\geq$ 2 Pa*s (2.000 cP) aufweist; wobei die Viskosität unter Verwendung eines Brookfield Digital-Viskosimeters, Modell DV-I Prime, mit einem Brookfield Temperaturregler und Thermosel, gemäß ASTM-Norm D1986, gemessen wird.

10. Zusammensetzung nach einem der Ansprüche 1 bis 9, wobei die Zusammensetzung eine Viskosität (177 °C) $\leq$ 15 Pa*s (15.000 cP) aufweist; wobei die Viskosität unter Verwendung eines Brookfield Digital-Viskosimeters, Modell DV-I Prime, mit einem Brookfield Temperaturregler und Thermosel, gemäß ASTM-Norm D1986, gemessen wird.

11. Zusammensetzung nach einem der Ansprüche 1 bis 10, wobei die Zusammensetzung den folgenden Zusammenhang erfüllt: [(Loop Tack (N)/(Viskosität (mPa*s)) x (1000 (mPa*s/N))] = [(Loop Tack (N)/(Viskosität (cP)) x (1000 (cP/N))] $\geq$ 4,0; wobei die Viskosität unter Verwendung eines Brookfield Digital-Viskosimeters, Modell DV-I Prime, mit einem Brookfield Temperaturregler und Thermosel, gemäß ASTM-Norm D1986, gemessen wird; und Loop Tack wie in der Beschreibung beschrieben gemessen wird.

12. Zusammensetzung nach einem der Ansprüche 1 bis 11, wobei die Zusammensetzung den folgenden Zusammenhang erfüllt: [(90-Grad-Schälwert (0,18 kg/cm)/(Viskosität (mPa*s)) x (1000 (mPa*s·5,6 cm/kg))] = [(90-Grad-Schälwert (lb/in)/(Viskosität (cP)) x (1000 (cP.in/lb))] ≥ 1,0; wobei die Viskosität unter Verwendung eines Brookfield Digital-Viskosimeters, Modell DV-I Prime, mit einem Brookfield Temperaturregler und Thermosel, gemäß ASTM-Norm D1986, gemessen wird; und 90-Grad-Schälwert wie in der Beschreibung beschrieben gemessen wird.

13. Zusammensetzung nach einem der Ansprüche 1 bis 12, wobei das Alpha-Olefin des Ethylen/Alpha-Olefin-Multiblockinterpolymers (Komponente A) ein C3-C20-Alpha-Olefin ist.

14. Zusammensetzung nach einem der Ansprüche 1 bis 13, wobei das Ethylen/Alpha-Olefin-Multiblockinterpolymer von Komponente A ein Ethylen/Alpha-Olefin-Multiblockcopolymer ist.

15. Artikel, umfassend mindestens eine Komponente, die aus der Zusammensetzung nach einem der Ansprüche 1 bis 14 ausgebildet ist.

**Revendications**

1. Composition comprenant ce qui suit :

   a) au moins un interpolymère multibloc d'éthylène/alpha-oléfine qui comprend des segments mous (SS) et des segments durs (HS), et dans laquelle l'interpolymère comprend les propriétés suivantes :

   i) un indice de fusion (I2) ≥ 30 dg/min,
   ii) un rapport molaire entre « l'alpha-oléfine dans le SS » et « l'alpha-oléfine dans le HS » ≥ 18,
   iii) un rapport en poids entre SS et HS ≤ 12,0 ;

   b) au moins un agent poisseux et/ou au moins une huile.

2. Composition selon la revendication 1, dans laquelle l'interpolymère multibloc d'éthylène/alpha-oléfine a une quantité d'alpha-oléfine ≥ 10 % en moles, sur la base du nombre total de moles de monomères dans l'interpolymère.

3. Composition selon la revendication 1 ou la revendication 2, dans laquelle l'interpolymère multibloc d'éthylène/alpha-oléfine a une masse volumique ≥ 0,856 g/cm$^3$.

4. Composition selon l'une quelconque des revendications 1 à 3, dans laquelle l'interpolymère multibloc d'éthylène/$\alpha$-oléfine a une masse volumique ≤ 0,874 g/cm$^3$.

5. Composition selon l'une quelconque des revendications 1 à 4, dans laquelle l'interpolymère multibloc d'éthylène/alpha-oléfine a une distribution de masses moléculaires MWD (= Mw/Mn) ≥ 1,5.

6. Composition selon l'une quelconque des revendications 1 à 5, dans laquelle l'interpolymère multibloc d'éthylène/alpha-oléfine a une distribution de masses moléculaires MWD (= Mw/Mn) ≤ 3,0.

7. Composition selon l'une quelconque des revendications 1 à 6, dans laquelle la composition comprend au moins un agent poisseux et au moins une huile.

8. Composition selon l'une quelconque des revendications 1 à 7, dans laquelle la composition comprend ≥ 98,5 % en poids de la somme des composants a et b, sur la base du poids de la composition.

9. Composition selon l'une quelconque des revendications 1 à 8, dans laquelle la composition a une viscosité (177 °C) ≥ 2 000 Pa*s (2 000 cP) ; dans laquelle la viscosité est mesurée à l'aide d'un viscosimètre numérique Brookfield, modèle DV-I prime, avec un dispositif de commande de température et thermosel Brookfield, conformément à la norme ASTM D1986.

**10.** Composition selon l'une quelconque des revendications 1 à 9, dans laquelle la composition a une viscosité (177 °C) ≤ 15 Pa*s (15 000 cP) ; dans laquelle la viscosité est mesurée à l'aide d'un viscosimètre numérique Brookfield, modèle DV-I prime, avec un dispositif de commande de température et thermosel Brookfield, conformément à la norme ASTM D1986.

**11.** Composition selon l'une quelconque des revendications 1 à 10, dans laquelle la composition satisfait à la relation suivante : [(adhérence en boucle (N)/(viscosité (mPa*s)) x (1 000 (mPa*s/N))] = [(adhérence en boucle (N)/(viscosité (cP)) x (1 000 (cP/N))] ≥ 4,0 ; dans laquelle la viscosité est mesurée à l'aide d'un viscosimètre numérique Brookfield, modèle DV-I prime, avec un dispositif de commande de température et thermosel Brookfield, conformément à la norme ASTM D1986 ; et l'adhérence en boucle est mesurée comme décrit dans la description.

**12.** Composition selon l'une quelconque des revendications 1 à 11, dans laquelle la composition satisfait à la relation suivante : [(pelage à 90 degrés (0,18 kg/cm)/(viscosité (mPa*s)) x (1 000 (mPa*s·5,6 cm/kg))] = [(pelage à 90 degrés (lb/po)/(viscosité (cP)) x (1 000 (cP·po/lb))] ≥ 1,0 ; dans laquelle la viscosité est mesurée à l'aide d'un viscosimètre numérique Brookfield, modèle DV-I prime, avec un dispositif de commande de température et thermosel Brookfield, conformément à la norme ASTM D1986 ; et le pelage à 90 degrés est mesuré comme décrit dans la description.

**13.** Composition selon l'une quelconque des revendications 1 à 12, dans laquelle l'alpha-oléfine de l'interpolymère multibloc d'éthylène/alpha-oléfine (composant a) est une alpha-oléfine en C3-C20.

**14.** Composition selon l'une quelconque des revendications 1 à 13, dans laquelle l'interpolymère multibloc d'éthylène/alpha-oléfine du composant a est un copolymère multibloc d'éthylène/alpha-oléfine.

**15.** Article comprenant au moins un composant formé à partir de la composition selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9243173 B
- US 7524911 B
- US 20110262747 A
- US 7989543 B
- US 7608668 B
- EP 3090028 A1
- EP 2580286 A1
- US 2018223092 A1
- EP 2938690 A1
- US 7858706 B
- US 7893166 B
- US 7947793 B
- US 20100197880 A

### Non-patent literature cited in the description

- **WILLIAMS** ; **WARD**. *J. Polym. Sci., Polym. Let.*, 1968, vol. 6, 621
- **RANDALL**. Macromolecular Chemistry and Physics. *Journal of Macromolecular Science*, 1989, vol. C29 (2,3), 201-317